# EUROPEAN PATENT SPECIFICATION

(11) **EP 3 551 577 B1**
(45) Date of publication and mention of the grant of the patent: **13.08.2025**
(21) Application number: 17805230.4
(22) Date of filing: 04.12.2017
(51) Int. Cl.: C01B 9/00

(54) **METHOD FOR REDUCTION OF OXO-HALOGEN COMPOUNDS**
VERFAHREN ZUR REDUKTION VON HALOGENEN IN HALOGENIDE
MÉTHODE POUR LA RÉDUCTION D'HALOGÈNES EN HALOGÉNURES

(30) Priority: 06.12.2016 EP 16202532
(43) Date of publication of application: 16.10.2019
(73) Proprietor: Grillo Chemicals GmbH, 47169 Duisburg (DE)
(72) Inventor: RÉTHORÉ, Céline, 47169 Duisburg (DE); OTT, Timo, 47169 Duisburg (DE)
(74) Representative: dompatent von Kreisler Selting Werner - Partnerschaft von Patent- und Rechtsanwälten mbB
(86) International application number: PCT/EP2017/081332
(87) International publication number: WO 2018/104210

(56) References cited:
- WO-A1-02/053277
- WO-A1-99/32397
- CN-B- 102 502 504
- US-A- 3 132 068
- US-A- 3 896 213
- US-A- 5 230 879
- WILLIAM C A, MORISANI S J: "Determining Chlorine Concentrations in Air and Water Samples for Scrubbing Studies Using Ion Chromatography", JOURNAL OF CHROMATOGRAPHIC SCIENCE, OXFORD UNIVERSITY PRESS, CARY, NC, USA, vol. 27, no. 1, 1 January 1989 (1989-01-01), pages 42 - 46, XP009193453, ISSN: 0021-9665

## Description

The present invention refers to a method to reduce halogens into halides wherein sulfites, bisulfites, pyrosulfites, and precursors thereof are used as reducing agents.

Halogens are a group in the periodic table consisting of five elements, namely fluorine, chlorine, bromine, iodine and astate. Both chlorine and bromine are used as disinfectants for example for drinking water, swimming pools, fresh wounds, spas, dishes and surfaces. Their reactivity is also good for use in bleaching. Sodium hypochlorite is the active ingredient of most fabric bleaches. Not to forget, chlorine also reacts with sodium to sodium chloride, being table salt.

Halogens are not only used to treat material but might be also part of a material. The most famous might be halogen lamps. Usually, they comprise iodine or bromine. Bromine is also often used as fire retardant in electronic parts.

Thus, for example in the recycling of electronic waste or any other industrial waste comprising halogens, halogens have to be separated from the other material as they might disturb the further process of recycling. But as they are raw materials for several processes, also the recovery of the halogens is one aspect.

One known method to separate halogens from other materials is the addition of sodium hydroxide which results in the formation of oxohalogen compounds such as bromate BrO₃⁻. Respective oxo-halogen-compounds are toxic, cancerogen, strong oxidizer and poorly safe for transport, since they can release oxygen gas. Other methods for the reduction halogens into halides are disclosed in US3896213 A and US3132068 A.

The simple addition of standard reducing agents does not lead to complete reduction of oxo-compounds into halogenides. DE 41 01 333 suggests the addition of hydrazine hydroxide. But as an intermediate, still oxo-halogen-compounds occur. Further, hydrazine hydroxide is toxic itself.

Moreover, the alkali-solutions that contain both halogenides and oxo-halogen-compounds are extremely dangerous since the contact with acids or even high dilution with water can lead to the formation and release of toxic halogen, such as chlorine or bromine. This implies many safety procedures during synthesis, storage and transport (included loading and unloading) of respective solutions.

It is therefore the object of the present invention to provide a method to reduce halogens into halides wherein the formation of oxo-halogen-compounds shall be avoided. The invention relates to a method to reduce the hypohalogenite intermediates before they can oxidize to higher halogen-oxide-anions, being the above mentioned oxo-halogen-compounds, such as bromate, chlorate and others.

Surprisingly, it has been found that hydrogen peroxide, sulfites, bisulfites and pyrosulfites are able to reduce halogens into halides and at the same time avoiding the formation of hypohalogenite intermediates and thus the production of oxo-halogen-compounds. Thus, in a first aspect the object of the present invention is solved by a method to reduce halogens into halides wherein the method comprises contacting a reducing agent with a solution comprising halogens and the reducing agent is selected from hydrogen peroxide, sulfites, bisulfites, pyrosulfites, and mixtures thereof, wherein the method further comprises the step of adding a hydrogen halide as acid after addition of the reducing agent, wherein the pH value after addition of the hydrogen halide is within the range of from 2 to 12. Within the scope of the present invention it is possible to add a solution comprising halogens to the reducing agent. But it is also within the scope of the invention that the reducing agent is added to a solution comprising halogens. For a good and homogenous contact, the resulting mixture is preferably stirred, especially preferred is the stirring during the contacting of the compound as well as afterwards.

"Solution comprising halogens" within the meaning of the present invention can be an aqueous or non-aqueous solution in which the halogen is solved. Within the meaning of the present invention is also the pure halogen (i.e. liquid bromine) or an emulsion or suspension comprising halogens.

By addition of the respective reducing agents the halogens are reduced into halides without formation of hypohalogenite intermediates and/or for motion of oxohalogen compounds. Preferred is an alkali sulfite, such as sodium sulfite or potassium sulfite, as reducing agent, as the respective reducing agent can easily be handled and is further cost effective. The reducing agent is usually added in an aqueous solution.

Alternatively, an alkali bisulfite, such as sodium bisulfite or potassium bisulfite might be used. Also alkali pyrosulfites, such as sodium pyrosulfite or potassium pyrosulfite can be used. Further, sulfites, bisulfites and pyrosulfites might be used alone or in mixture with each other. For an economic handling, only one reducing agent is used which is preferably sodium sulfite and/or potassium sulfite.

The sulfites can also be formed in-situ, for example by mixing sodium hydroxide-solution and sodium bisulfite or even by introducing sulfur dioxide into a basic solution. Thus, also precursors of sulfites, bisulfites and/or pyrosulfites might be used.

Surprisingly it has been found that also hydrogen peroxide acts as a reducing agent for the reduction of halogens into halides without formation of hypohalogenite compounds as intermediates.

The dosing of the reducing agent can be automatized using redox-potential measurements. Through this procedure, the excess of the reducing agent can be minimized. Any method of measuring the amount of reducing agent can also be used.

In contrast to other processes as described in the prior art, such as in DE 41 01 333 A1, the formation of oxo-halogen-compounds such as bromate or chlorate is avoided as the halogen, especially chlorine, or bromine, is in the method according to the present invention directly transformed into the respective halogenide, namely chloride or bromide.

The method of the present invention improves the safety for the workers as oxo-halogen-compounds are not produced. Also the safety for the environment is significantly improved and transportation problems are solved.

In case the concentration of halogens is high in the initial solution, the problem might occur that the sulfate salts start to crystallize. This is avoided by addition of a hydrogen halide. With the hydrogen halide also the pH of the solution is influenced. The pH is within the range of from 2 to 12, preferably of from 5 to 10, and especially of from 6 to 9 after addition of the halogen halide.

In case alkali sulfites are used, the pH is 6 or above, preferably. For bisulfites, pyrosulfites and other than alkali sulfites, the pH might be also below 7. For these cases, the pH of the solution is preferably 5 or above.

In case a precursor is used as a reducing agent, such as SO₂ for example, the pH might even be further acid, e. g. the pH is preferably between 2 and 5.

The halide of the hydrogen halide might be the same as the halogenide being present in the original solution. Thus, if bromine should be reduced to bromide also hydrogen bromide should be used. Accordingly, if chlorine is reduced into chloride, hydrochloric acid should be used.

If the halide of the hydrogen halide is the same as the halogenides being present in the original solution, the halogen itself might be recovered in the end. Using the same halide enables the production of halogen in the end which might be used again in the production of any products.

In case, obtaining a pure halogen is not of interest, HCl (hydrogen chloride) is preferably used as hydrogen halide. HCl is a strong and at the same time cheap acid. Thus, it enables an economic process according to the present invention. If economic interests are the most important part, hydrogen chloride is the preferred hydrogen halide.

The addition of the halogen halide helps further to reduce the crystallization temperature of alkali sulfate or alkali sulfite. Also the concentration of the alkali sulfite which is needed in the method of the invention can be reduced by the addition of the hydrogen halide.

The method of the present invention also enables the recovery of the halogens. Thus, after the halogens have been reduced into halides and separated it is possible to recover the halogens again. Thus, in a preferred embodiment the method further comprises the step of recovery the halogens. Here, the halides are oxidized to the halogen, e.g. the chloride to chlorine or bromide to bromine, again by adding a strong oxidizing agent. This strong oxidizing agent might be for example chlorine.

The method of the present invention can be used in the recycling of electronic waste where (organo)-halogens are used as flame retardants but also in the reduction of halogens in any other procedure.

Further technical areas in which the method of the present invention might be used is the claiming of exhaust gases for example when a burning waste. In the production of halogens, the waste water also usually contains halogens, which might be recycled from the waste water with the process according to the present invention. When producing halogenated material, exhaust gases might be present also containing halogens. Again here, the exhaust gases might be processed with the process according to the present invention. Thus, in any process where halogens should be regenerated from gas or solutions, the process as described by the invention might be used.

## Claims

1. Method to reduce halogens into halides wherein the formation of oxo-halogen-compounds is avoided, said method comprises contacting a reducing agent with a solution comprising halogens and the reducing agent is selected from hydrogen peroxide, sulfites, bisulfites, pyrosulfites, and mixtures thereof, wherein the method further comprises the step of adding a hydrogen halide as acid after addition of the reducing agent, wherein the pH value after addition of the hydrogen halide is within the range of from 2 to 12.

2. Method according to claim 1 wherein the reducing agent is selected from alkali sulfites, especially sodium sulfite and/or potassium sulfite.

3. Method according to claim 1 wherein the reducing agent is selected from alkali bisulfites, especially sodium bisulfite and/or potassium bisulfite.

4. Method according to claim 1 wherein the reducing agent is selected from alkali pyrosulfites, especially sodium pyrosulfite and/or potassium pyrosulfite.

5. Method according to claim 1 wherein the reducing agent is formed in-situ by introducing sulfur dioxide into a basic solution.

6. Method according any of claims 1 to 5 wherein the solution is an aqueous solution, especially an alkali solution with an initial pH of 7 or above.

7. Method according to claim 1 wherein the halide of the hydrogen halide is the same as the halogen to be reduced into a halide, preferably the hydrogen halide is HCl.

8. Method according to claim 1 or 7 wherein the pH value after addition of the hydrogen halide is within the range of from 5 to 10, and especially of from 6 to 9.

9. Method according to any of claims 1 to 8 further comprising the recovery of halogens as a further step by adding a strong oxidizing agent.

10. Use of a method according to any of claims 1 to 9 in the recycling of electronic waste.

## Patentansprüche

1. Verfahren zum Reduzieren von Halogenen zu Halogeniden, wobei die Bildung von Oxohalogenverbindungen vermieden wird, wobei das Verfahren das In-Kontakt-Bringen eines Reduktionsmittels mit einer Lösung, die Halogene enthält, umfasst, wobei das Reduktionsmittel aus der Gruppe von Wasserstoffperoxid, Sulfiten, Hydrogensulfiten, Pyrosulfiten und Gemischen davon ausgewählt ist, wobei das Verfahren weiterhin den Schritt des Hinzufügens eines Halogenwasserstoffs als Säure nach der Zugabe des Reduktionsmittels umfasst, wobei der pH-Wert nach der Zugabe des Halogenwasserstoffs im Bereich von 2 bis 12 liegt.

2. Verfahren gemäß Anspruch 1, wobei das Reduktionsmittel aus Alkalisulfiten, insbesondere Natriumsulfit und/oder Kaliumsulfit, ausgewählt ist.

3. Verfahren gemäß Anspruch 1, wobei das Reduktionsmittel aus Alkalihydrogensulfiten, insbesondere Natriumhydrogensulfit und/oder Kaliumhydrogensulfit, ausgewählt ist.

4. Verfahren gemäß Anspruch 1, wobei das Reduktionsmittel aus Alkalipyrosulfiten, insbesondere Natriumpyrosulfit und/oder Kaliumpyrosulfit, ausgewählt ist.

5. Verfahren gemäß Anspruch 1, wobei das Reduktionsmittel *in situ* durch Einführen von Schwefeldioxid in eine basische Lösung gebildet wird.

6. Verfahren gemäß einem der Ansprüche 1 bis 5, wobei die Lösung eine wässrige Lösung, insbesondere eine Alkalilösung mit einem Anfangs-pH-Wert von 7 oder höher, ist.

7. Verfahren gemäß Anspruch 1, wobei das Halogen des Halogenwasserstoffs dasselbe ist, wie das zu einem Halogenid zu reduzierende Halogen, wobei es sich bei dem Halogenwasserstoff vorzugsweise um HCl handelt.

8. Verfahren gemäß Anspruch 1 oder 7, wobei der pH-Wert nach der Zugabe des Halogenwasserstoffs im Bereich von 5 bis 10 und insbesondere von 6 bis 9 liegt.

9. Verfahren gemäß einem der Ansprüche 1 bis 8, weiterhin umfassend die Gewinnung von Halogenen als weiteren Schritt durch Zugabe eines starken Oxidationsmittels.

10. Verwendung eines Verfahrens gemäß einem der Ansprüche 1 bis 9 beim Recycling von Elektronikabfall.

## Revendications

1. Procédé pour réduire des halogènes en halogénures, dans lequel la formation de composés oxo-halogénés est évitée, ledit procédé comprenant les étapes consistant à : mettre un agent réducteur en contact avec une solution comprenant des halogènes, et ledit agent réducteur est choisi parmi peroxyde d'hydrogène, sulfites, bisulfites, pyrosulfites et des mélanges de ceux-ci, dans lequel ledit procédé comprend en outre l'étape consistant en ajouter un halogénure d'hydrogène comme acide après l'ajout de l'agent réducteur, dans lequel la valeur du pH après l'ajout de l'halogénure d'hydrogène est comprise entre 2 et 12.

2. Procédé selon la revendication 1, dans lequel l'agent réducteur est choisi parmi les sulfites alcalins, notamment le sulfite de sodium et/ou le sulfite de potassium.

3. Procédé selon la revendication 1, dans lequel l'agent réducteur est choisi parmi les bisulfites alcalins, notamment le bisulfite de sodium et/ou le bisulfite de potassium.

4. Procédé selon la revendication 1, dans lequel l'agent réducteur est choisi parmi les pyrosulfites alcalins, notamment le pyrosulfite de sodium et/ou le pyrosulfite de potassium.

5. Procédé selon la revendication 1, dans lequel l'agent réducteur est formé in situ en introduisant du dioxyde de soufre dans une solution basique.

6. Procédé selon l'une quelconque des revendications 1 à 5, dans lequel la solution est une solution aqueuse, en particulier une solution alcaline avec un pH initial de 7 ou plus.

7. Procédé selon la revendication 1, dans lequel l'halogène de l'halogénure d'hydrogène est le même que l'halogène à réduire en halogénure, de préférence l'halogénure d'hydrogène est HCl.

8. Procédé selon la revendication 1 ou 7, dans lequel la valeur du pH après l'ajout de l'halogénure d'hydrogène est comprise entre 5 et 10, notamment entre 6 et 9.

9. Procédé selon l'une quelconque des revendications 1 à 8, comprenant en outre la récupération d'halogènes comme étape additionnelle en ajoutant un agent oxydant fort.

10. Utilisation d'un procédé selon l'une quelconque des revendications 1 à 9 dans le recyclage de déchets électroniques.
